# EUROPÄISCHE PATENTANMELDUNG

(11) **EP 0 598 697 A1**
(43) Veröffentlichungstag der Anmeldung: **25.05.1994**
(21) Anmeldenummer: 93890185.7
(22) Anmeldetag: 22.09.1993
(51) Int. Cl.: F01P 5/12, F04D 13/02, F02B 67/00

(54) **Brennkraftmaschine**

(30) Priorität: 16.11.1992 AT 2261/92
(71) Anmelder: Laimböck, Franz, Dipl.Ing.Dr., A-8051 Graz-Thal (AT)
(72) Erfinder: Laimböck, Franz, Dipl.Ing.Dr., A-8051 Graz-Thal (AT)
(74) Vertreter: Hübscher, Heiner, Dipl.-Ing.

(57) **Zusammenfassung**

Eine Brennkraftmaschine weist einen über eine Kühlmittelpumpe (6) geführten Kühlmittelkreislauf auf und besitzt eine von der Maschinenwelle (1) angetriebene Zünd bzw. Zündlichtmaschine (3). Um den Kühlmittelkreislauf gegen das Öl in der Brennkraftmaschine ohne Dichtung abzuschirmen, ist der Läufer (8) der vorzugsweise in Kunststoff gekapselten Kühlmittelpumpe (6) als Läufer (7) eines Elektromotors ausgebildet und die Kühlmittelpumpe (6) ist im Wirkungsbereich des drehenden Magnetfeldes des Rotors (2) der Zünd- bzw. Zündlichtmaschine (3) angeordnet.

## Beschreibung

Die Erfindung betrifft eine Brennkraftmaschine mit einem über eine Kühlmittelpumpe geführten Kühlmittelkreislauf und einer von der Maschinenwelle angetriebenen elektrischen Zünd- bzw. Zündlichtmaschine.

Die Kühlmittelpumpe ist erforderlich, um die Zirkulation des Kühlmittels zu verstärken und dadurch die Wärmeübertragung zu verbessern, so daß das Gewicht und Volumen des Kühlers, der Kühlmittelrohre oder -schläuche und der erforderlichen Ummantelung verringert werden können. Wird aber die Kühlmittelpumpe mechanisch von der Brennkraftmaschine von außen her angetrieben, so muß selbstverständlich das Kühlmittel von dem immer vorhandenen Öl bzw. Schmiermittel der Brennkraftmaschine sauber getrennt werden. Die nach außen führende Antriebswelle der Kühlmittelpumpe erfordert demnach eine entsprechende Abdichtung. Die Kühlmittelpumpe bringt im allgemeinen einen nicht unbeträchtlichen Leistungsverlust von etwa 80 Watt mit sich, wovon dann allein etwa 50 Watt von der Dichtung als reine Reibungsverluste verbraucht werden.

Demnach liegt der Erfindung die Aufgabe zugrunde, diesen Mangel zu beseitigen und eine Brennkraftmaschine der eingangs geschilderten Art zu schaffen, bei der diese Verluste vermieden werden, ohne ein Lecken des Kühlmittelkreislaufes befürchten zu müssen.

Die Erfindung löst die gestellte Aufgabe dadurch, daß in an sich bekannter Weise der Läufer der vorzugsweise in Kunststoff gekapselten Kühlmittelpumpe als Läufer eines Elektromotors ausgebildet ist, und daß die Kühlmittelpumpe im Wirkungsbereich des drehenden Magnetfeldes des Rotors der Zünd- bzw. Zündlichtmaschine angeordnet ist.

Bei einer solchen Ausbildung bzw. Anordnung wird der Läufer der Kühlmittelpumpe mit Hilfe des Rotors der Zünd- bzw. Zündlichtmaschine angetrieben, ohne eine Welle od. dgl. aus dem Pumpengehäuse herausführen zu müssen. Es erübrigt sich daher jegliche Abdichtung, und es ist die Kapsel bzw. das Pumpengehäuse voll in den Kühlmittelkreislauf integriert, ohne daß ein Lecken zu befürchten ist oder Reibungsverluste durch eine Dichtung od. dgl. auftreten.

Der Antrieb einer Pumpe mit Hilfe eines als Rotor eines Elektromotors ausgebildeten Pumpenläufers und einem äußeren Drehfeld einer elektrischen Maschine ist zwar an sich bekannt, doch handelt es sich dabei um Anordnungen in der chemischen Industrie oder in Kernkraftwerken, die kein Vorbild für den Kühlmittelkreislauf einer Brennkraftmaschine mit Zünd- bzw. Zündlichtmaschine, insbesondere für Kleinkraftfahrzeuge bzw. Zweiräder, abgeben können.

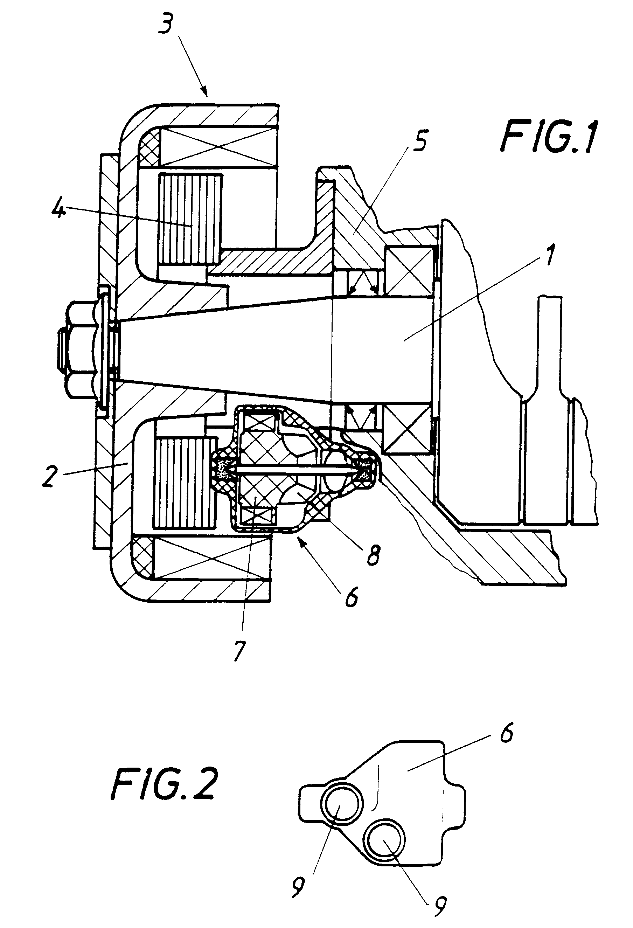

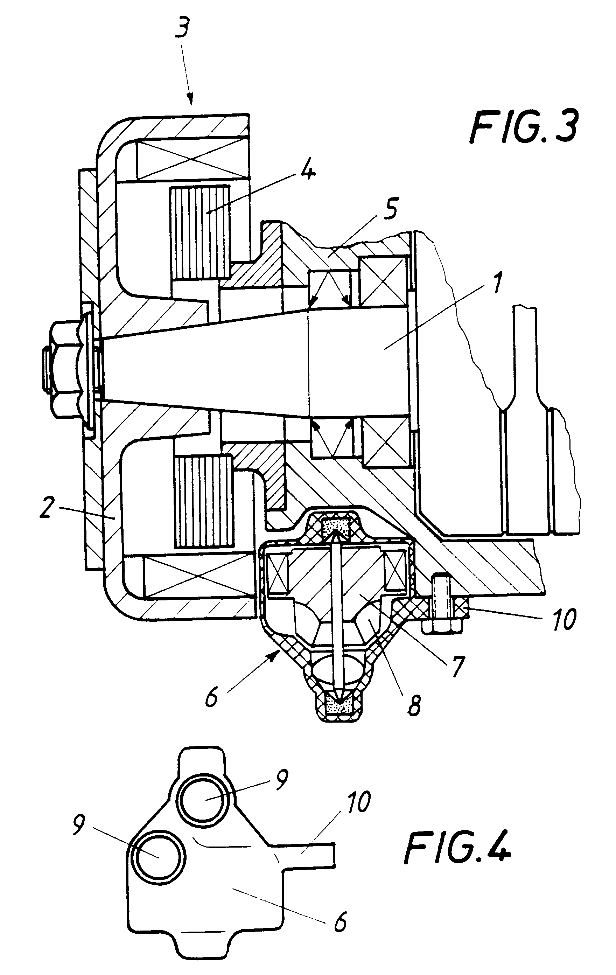

In der Zeichnung ist der Erfindungsgegenstand beispielsweise dargestellt, und zwar zeigen Fig. 1 einen Teil der Kurbelwelle einer Brennkraftmaschine mit Zünd- bzw. Zündlichtmaschine und einer im wesentlichen innerhalb ihres Rotors angeordneten Kühlmittelpumpe im Schnitt, Fig. 2 die Kühlmittelpumpe für sich in Draufsicht, Fig. 3 eine ähnliche Konstruktion wie Fig. 1, bei der jedoch die Kühlmittelpumpe am Rand des Rotors der Zünd- bzw. Zündlichtmaschine angeordnet ist und Fig. 4 eine Draufsicht der entsprechenden Kühlmittelpumpe.

Auf der Kurbelwelle 1 einer Brennkraftmaschine ist der Rotor 2 einer Zünd- bzw. Zündlichtmaschine 3 befestigt, deren Stator 4 am Maschinengehäuse 5 festsitzt. Gemäß Fig. 1 ist eine Kühlmittelpumpe 6, die in einem Kunststoffgehäuse gekapselt ist, so angeordnet, daß sie mit einem vorzugsweise als Asynchronläufer 7 eines Elektromotors ausgebildeten Teil ihres Läufers 8 in den Rotor 2, also in das drehende Magnetfeld der Zünd- bzw. Zündlichtmaschine 3 hineinragt und auf diese Weise ihren Antrieb erhält. Mit 9 sind die Ein- und Ausgangsöffnungen der Pumpe 6 für den Kühlmittelkreislauf bezeichnet.

Die Ausbildung nach Fig. 3 unterscheidet sich von jener nach Fig. 1 lediglich dadurch, daß die Kühlmittelpumpe 6 am stirnseitigen Rand des Rotors 2 der Zünd- bzw. Zündlichtmaschine 3 angeordnet ist, wo sie ebenfalls noch im Wirkungsbereich des drehenden Magnetfeldes des Rotors 2 liegt. Die Pumpe 6 ist mit einem Auge 10 zum Anschrauben am Kraftmaschinengehäuse 5 versehen.

## Patentansprüche

1. Brennkraftmaschine mit einem über eine Kühlmittelpumpe (6) geführten Kühlmittelkreislauf und einer von der Maschinenwelle (1) angetriebenen elektrischen Zünd- bzw. Zündlichtmaschine (3), dadurch gekennzeichnet, daß in an sich bekannter Weise der Läufer (8) der vorzugsweise in Kunststoff gekapselten Kühlmittelpumpe (6) als Läufer (7) eines Elektromotors ausgebildet ist und daß die Kühlmittelpumpe (6) im Wirkungsbereich des drehenden Magnetfeldes des Rotors (2) der Zünd- bzw. Zündlichtmaschine (3) angeordnet ist.
